# EUROPEAN PATENT APPLICATION

(11) **EP 4 742 214 A1**
(43) Date of publication of application: **13.05.2026**
(21) Application number: 25207110.5
(22) Date of filing: 07.10.2025
(51) Int. Cl.: G08G 1/16, B60Q 9/00, G06V 20/58, B60R 1/27

(54) **DRIVING ASSISTANCE DEVICE**

(30) Priority: 31.10.2024 JP 2024191584
(71) Applicant: AISIN CORPORATION, Aichi 448-8650 (JP)
(72) Inventor: WATANABE, Kazuya, Kariya, 448-8650 (JP); YAMAMOTO, Kinji, Kariya, 448-8650 (JP)
(74) Representative: TBK

(57) **Abstract**

Provided is a driving assistance device (1) in which: an overhead image (62) in which surroundings of a vehicle (2) is viewed vertically downward from a virtual viewpoint set above the vehicle is displayed on a display device (4); when there is an object of attention (63), which is an object requiring attention for the vehicle, around the vehicle, a model image (65) indicating an appearance of the object of attention is disposed and displayed at a position of the object of attention in the overhead image; and in displaying the model image, the model image is inclined and displayed in a direction in which a display area of the model image in the overhead image increases according to a state of the object of attention.

## Description

### TECHNICAL FIELD

This disclosure relates to a driving assistance device that assists driving of a vehicle.

### BACKGROUND DISCUSSION

In the related art, various methods are used as an information providing method for providing an occupant of a vehicle with various types of information for assisting the traveling of the vehicle, such as route guidance and warning of obstacles. Examples thereof include a display by a liquid crystal display provided in the vehicle and a sound output from a speaker. Here, there are areas that are blind spots around the vehicle, that are difficult to be seen from a position of a driver, and to allow the driver to understand a situation in such blind spots, especially when performing special operations such as a parking operation or a garage-leaving operation, vehicle surrounding images indicating the surroundings of the vehicle are displayed on the liquid crystal display in the related art.

In Japanese Patent No. 5165631, in particular, when the vehicle surrounding image is displayed, when there is an object of attention that is an object requiring attention for the vehicle around the vehicle, an alternative image for calling attention to the object of attention is also displayed at a position of the object of attention. It is also disclosed that when an overhead image in which the surroundings of the vehicle is viewed vertically downward from a virtual viewpoint set above the vehicle is displayed as the vehicle surrounding image, the alternative image is inclined and displayed to improve the visibility of the alternative image.

Japanese Patent No. 5165631 (paragraphs 0046 to 0050 and Fig. 10) (Reference 1) discloses that the visibility of the alternative image is improved even in the overhead image by displaying the alternative image in an inclined manner. How the alternative image is inclined is determined by a relative position of the alternative image with respect to the vehicle (corresponding to a relative position of the object of attention with respect to the vehicle). That is, when the relative position with respect to the vehicle is the same, the alternative image is similarly inclined regardless of a state of the object of attention. However, the purpose of displaying the alternative image is to call attention to the object of attention, and it is not sufficient to simply grasp the presence of the object of attention, and it is important to allow a user to recognize the state of the object of attention (for example, whether the object of attention is stopped, approaching a host vehicle side, or moving away).

A need thus exists for a driving assistance device capable of improving visibility and prompting a user to alert according to a state of an object of attention by displaying a model image indicating the object of attention in an inclined manner in an overhead image according to the state of the object of attention.

### SUMMARY

According to an aspect of this disclosure, there is provided a driving assistance device in which: an overhead image in which surroundings of a vehicle is viewed vertically downward from a virtual viewpoint set above the vehicle is displayed on a display device; when there is an object of attention, which is an object requiring attention for the vehicle, around the vehicle, a model image indicating an appearance of the object of attention is disposed and displayed at a position of the object of attention in the overhead image; and in displaying the model image, the model image is inclined and displayed in a direction in which a display area of the model image in the overhead image increases according to a state of the object of attention.

The "overhead image" may be an image of an actual scene obtained by capturing images of the surroundings of the vehicle by an image-capturing device such as a camera, or may be a virtual image obtained by reproducing the surroundings of the vehicle by computer graphics (CG). In the case of an image of an actual scene, the captured image itself may be used, or an image obtained by processing the captured image may be used. For example, an image obtained by synthesizing images captured by a plurality of cameras or an image obtained by viewpoint conversion may be used.

The "model image indicating an appearance of the object of attention" may be a model image having an appearance the same as or similar to the appearance of the object of attention, and the appearance of the object of attention and the appearance of the model image need not necessarily be the same or similar as long as the appearance of the object of attention can be grasped.

According to the driving assistance device having the above configuration, when the object of attention is guided using the overhead image, the model image indicating the appearance of the object of attention is displayed according to the position of the object of attention. Particularly, by inclining and displaying the model image according to the state of the object of attention, the visibility of the model image is improved, and the user can easily grasp what kind of object of attention is present around the vehicle without missing the presence of the object of attention. It is also possible to prompt the user to be warned according to the state of the object of attention.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram illustrating a configuration of a driving assistance device according to the present embodiment;
Fig. 3 is a flowchart of a driving assistance processing program according to the present embodiment;
Fig. 4 is a diagram illustrating a method for converting a captured image into a bird's-eye view image and an overhead image;
Fig. 5 is a diagram illustrating a method for generating the bird's-eye view image and the overhead image;
Fig. 6 is a diagram illustrating an object of attention included in the bird's-eye view image and the overhead image;
Fig. 7 is a diagram illustrating an example of a model image;
Fig. 8 is a diagram illustrating the model image displayed in the overhead image;
Fig. 9 is a diagram illustrating an inclination mode of the model image based on a state of the object of attention;
Fig. 10 is a diagram illustrating a display mode of a shadow of the model image; and
Fig. 11 is a diagram illustrating an assistance image in which the bird's-eye view image and the overhead image are synthesized with the model image.

### DETAILED DESCRIPTION

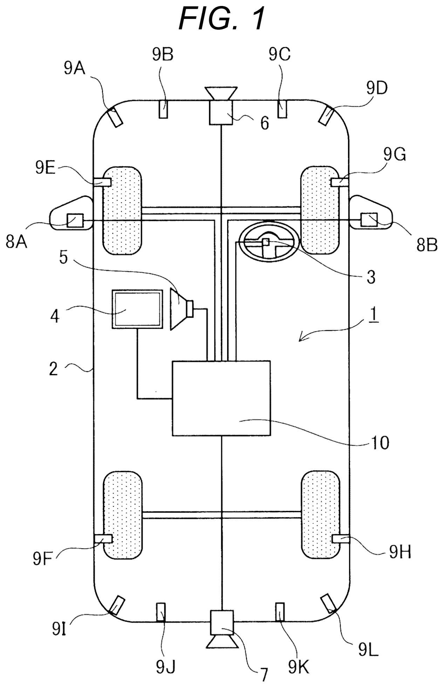

Hereinafter, a driving assistance device according to a specific embodiment disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 is a vehicle capable of manual driving traveling in which the vehicle travels based on a driving operation of a user, as well as assisted traveling using autonomous driving assistance in which the vehicle travels automatically without the driving operation of the user.

The autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary). In the following description, an autonomous driving section in which the autonomous driving assistance of the vehicle is performed includes a parking lot in addition to all road sections including general roads and highways. The autonomous driving assistance is performed only in a situation in which the user selects to perform the autonomous driving assistance (for example, turns on an autonomous driving start button) and it is determined that traveling by the autonomous driving assistance is possible. In contrast, the vehicle 2 may be a vehicle that can only perform assisted traveling with the autonomous driving assistance. Alternatively, the vehicle 2 may perform the assisted traveling by the autonomous driving assistance only for traveling (that is, parking assistance) to a parking space when the vehicle is parked.

In vehicle control in the autonomous driving assistance according to the present embodiment, for example, a current position of the vehicle, a lane in which the vehicle travels, and positions of surrounding obstacles are detected at any time, and the vehicle control of a steering, a drive source, and a brake is automatically performed such that the vehicle travels along a generated travel trajectory at a speed according to a speed plan generated in the same manner. In particular, when parking assistance is performed, the vehicle control is automatically performed in which the parking space, which is a target into which the vehicle is to be parked, and a surrounding situation are confirmed using detection results of a sensor or a camera, a parking trajectory to the parking space is calculated, the vehicle enters the parking space along the calculated parking trajectory, and the parking is completed. In addition to the normal parking assistance, the parking assistance also supports long-range parking, which involves parking in a distant parking space such as a garage at home or a monthly contracted parking space in a parking lot. In the parking assistance for long-range parking, vehicle control is automatically performed to move the vehicle to a distant, preset parking space and complete parking. However, in the parking assistance, only a steering operation may be automatically performed, and the drive source and the brake may be controlled based on a manual operation. Alternatively, only guidance on the parking trajectory into the parking space or guidance on a vehicle operation may be performed, and a parking operation into the parking space may be manually performed by the user.

While the vehicle control of the steering, the drive source, the brake, and the like is automatically performed, the occupant of the vehicle can cancel the autonomous driving assistance at any timing by an own intention, and can stop the vehicle by executing a brake operation. When the autonomous driving assistance is performed, as will be described later, scenery (which may be an actual scene or virtual scenery of CG) around the vehicle is displayed on an in-vehicle display, and a guidance for warning an object of attention that requires attention for the vehicle is performed, and the occupant of the vehicle can stop the vehicle by stopping the autonomous driving assistance by performing the brake operation if necessary while visually recognizing the display.

As illustrated in Fig. 1, the vehicle 2 includes an operation unit 3 that receives an operation from the occupant, a liquid crystal display 4 that displays a bird's-eye view image or an overhead image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that detect obstacles around the vehicle, and a driving assistance electronic control unit (ECU) 10 that performs various types of arithmetic processing based on received information. The driving assistance device 1 includes the driving assistance ECU 10.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays a bird's-eye view image or an overhead image of the surroundings of the vehicle generated by performing viewpoint conversion and synthesis processing on captured images captured by cameras including the front camera 6, the rear camera 7, and the side cameras 8A and 8B during the execution of autonomous driving assistance. When there is an object of attention that requires attention for the vehicle around the vehicle 2, such as a pedestrian or a bicycle, a model image indicating an appearance of the object of attention is superimposed and displayed at a position of the object of attention in the bird's-eye view image or the overhead image. The liquid crystal display 4 may also be used in a navigation device.

The speaker 5 is provided on the instrument panel of the vehicle 2 and outputs a guidance voice or a warning sound related to the driving assistance. The speaker 5 may also be used in the navigation device.

The front camera 6 is, for example, an image-capturing device including a camera using a solid-state imaging element such as a CCD and is provided, for example, above a front bumper of the vehicle 2 or on a back side of a rear-view mirror with an optical axis direction thereof being directed to the front in the traveling direction of the vehicle.

The rear camera 7 is also an image-capturing device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also image-capturing devices, each including a camera using a solid-state imaging element such as a CCD, and are attached to, for example, left and right side mirrors of the vehicle 2, with optical axis directions thereof being directed to lateral sides of the vehicle.

Then, the driving assistance ECU 10 performs the viewpoint conversion and the synthesis processing on the captured images captured by the cameras including the front camera 6, the rear camera 7, and the side cameras 8A and 8B, to generate the bird's-eye view image and the overhead image of the surroundings of the vehicle. During the execution of the autonomous driving assistance, by performing image recognition processing on the captured image, a partition line or an obstacle (another vehicle, a pedestrian, a bicycle, a wall, a guard rail, and other structures) around the vehicle is detected, and the autonomous driving assistance is executed based on a detection result thereof. In particular, when parking assistance is performed, the detection result of the obstacle obtained by the cameras is also used to confirm the parking space and the surrounding situation.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, another vehicle, and a wall, and an obstacle that forms the parking space. As the distance measurement sensor, a millimeter wave sensor or a laser sensor may be used instead of the ultrasonic sensor.

Installation positions and the installation directions of the respective ultrasonic sensors 9A to 9L can be set appropriately. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left side in the traveling direction such that the transmission direction of the probe wave is leftward in the traveling direction of the vehicle. The ultrasonic sensors 9G and 9H are provided on a right side surface of the vehicle 2 being directed to a right side in the traveling direction such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, a specific position (a relative position with respect to the vehicle) of the object can be specified in the same manner by triangulation using a measured distance of a previous position, a measured distance of a current position, and a movement distance therebetween as the vehicle moves.

The driving assistance ECU 10 is an electronic control unit that performs various types of processing related to the autonomous driving assistance. For example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. In particular, when parking assistance is performed, the vehicle control is performed in which the parking space, which is a target into which the vehicle is to be parked, and a surrounding situation are confirmed using detection results of the front camera 6, the rear camera 7, the side cameras 8A and 8B, and the ultrasonic sensors 9A to 9L, a parking trajectory to the parking space is calculated, the vehicle enters the parking space along the calculated parking trajectory, and the parking is completed. In contrast, when performing parking assistance for long-range parking, vehicle control is performed in which a parking trajectory including movement to a distant parking space that is registered in advance is calculated, such as a garage at home or a monthly contracted parking space in a parking lot, the vehicle enters the parking space along the calculated parking trajectory, and parking is completed. The bird's-eye view image or the overhead image of the surroundings of the vehicle generated from the captured image of the camera described above is displayed on the liquid crystal display 4, and in particular, when there is an object of attention that requires attention for the vehicle such as a pedestrian or a bicycle around the vehicle 2, the model image indicating the appearance of the object of attention is superimposed and displayed at the position of the object of attention in the bird's-eye view image or the overhead image, or a warning sound is output. The driving assistance ECU 10 is connected to the operation unit 3, the liquid crystal display 4, the speaker 5, the front camera 6, the rear camera 7, the side cameras 8A and 8B, and the ultrasonic sensors 9A to 9L via an in-vehicle network such as a CAN. The driving assistance ECU 10 is also connected to various sensors such as a vehicle speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components illustrated in Fig. 1, the vehicle 2 includes basic components as the vehicle 2. However, only a configuration related to control of the autonomous driving assistance and control related to the configuration will be described.

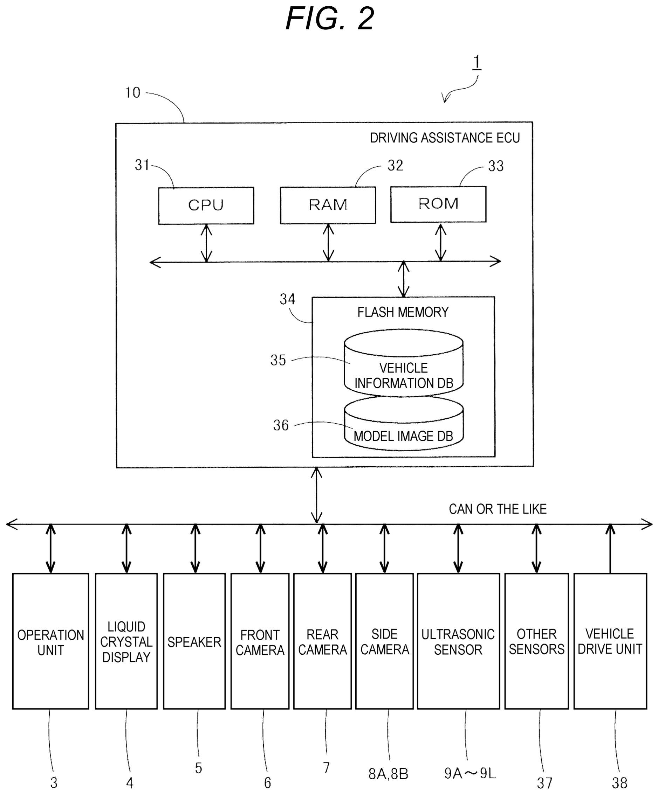

Next, particularly, the driving assistance ECU 10 of the driving assistance device 1 included in the vehicle 2 will be described in detail. Fig. 2 is a block diagram illustrating a configuration of the driving assistance device 1 according to the present embodiment.

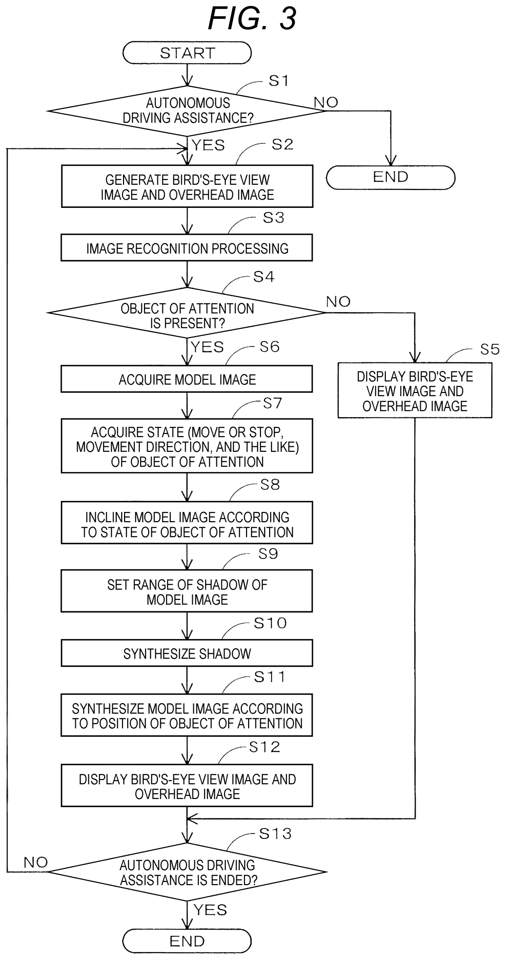

As illustrated in Fig. 2, the driving assistance electronic control unit (ECU) 10 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores travel trajectory data when the travel trajectory is calculated, a ROM 33 in which a driving assistance processing program (see Fig. 3) to be described later is recorded in addition to control programs, and a flash memory 34 that stores a program read from the ROM 33. The driving assistance ECU 10 executes various functions as processing algorithms. For example, the functions include a function of displaying, on the liquid crystal display 4, an overhead image in which the surroundings of the vehicle is viewed vertically downward from a virtual viewpoint set above the vehicle, a function of, when there is an object of attention which is an object requiring attention for the vehicle, around the vehicle, arranging and displaying a model image indicating the appearance of the object of attention at the position of the object of attention in the overhead image, a function of inclining and displaying the model image in a direction in which a display area of the model image in the overhead image increases according to the state of the object of attention when displaying the model image, and a function of displaying a shadow of the model image disposed in the overhead image.

The driving assistance ECU 10 is also connected to various sensors 37 for detecting behaviors of the vehicle, such as a vehicle speed sensor, a wheel speed sensor, an acceleration sensor, a gyro sensor, a steering sensor, and a shift position sensor, and a drive unit 38 of the vehicle, such as a steering wheel, a brake, an accelerator, and a transmission. A current behavior of the vehicle is detected based on detection results of these sensors 37, and the autonomous driving assistance for the vehicle 2 is performed by controlling the drive unit 38. As specific contents of autonomous driving assistance, for example, the current position of the vehicle, the lane in which the vehicle travels, and the positions of surrounding obstacles are detected at any time, and the vehicle control of a steering, a drive source, and a brake is performed such that the vehicle travels along a generated travel trajectory at a speed according to a speed plan generated in the same manner. However, only a steering operation may be automatically performed, and the drive source and the brake may be controlled based on a manual operation.

The flash memory 34 includes a vehicle information DB 35 and a model image DB 36. The vehicle information DB 35 stores various types of information related to the vehicle 2. For example, installation positions (heights from the ground surface and positions in a left-right direction) and detection axes (optical axes with the camera) of the cameras and the ultrasonic sensors 9A to 9L provided in the vehicle 2, a total length, a vehicle width, a wheelbase, a minimum turning radius, and the like are stored. Such pieces of information are input in advance by the occupant or a person on a vehicle manufacturer side.

Meanwhile, in the model image DB 36, various types of information used when drawing a 3D model image indicating an appearance of a person or a bicycle are stored. Here, in the present embodiment, an object that can take at least one state of a moving state and a stopped state, that is, an object that moves or stops instead of a fixed object such as a wall or a utility pole is defined as an object of attention that requires attention for the vehicle. Any object that moves or stops may be used as the object of attention, and preferably, a specific object among them may be used as the object of attention, and for example, the specific object is a person or a bicycle. However, the object of attention is not limited to a person or a bicycle, and may include, for example, a vehicle or a motorcycle. In this case, information used when drawing a 3D model image indicating an appearance of the vehicle or the motorcycle is also stored in the model image DB 36.

As various types of information used when drawing the 3D model image indicating the appearance of a person or a bicycle, the model image DB 36 stores information necessary for executing processing of creating a 3D CG such as modeling, scene layout setting, and rendering, a texture image to be attached to a created 3D CG model, and the like. The model image DB 36 may store a model image in a completed state that indicates the appearance of a person or a bicycle, and in this case, only one type of model image may be used for each type of the object of attention, or a plurality of model images may be prepared for each type. For example, different model images may be prepared for a child and an adult for a person, and for a city cycle and a mountain bike for a bicycle. However, in the following description, only one type of model image is used for each type of object of attention.

Next, the driving assistance processing program executed by the driving assistance ECU 10 in the driving assistance device 1 having the above-described configuration will be described with reference to Fig. 3. Fig. 3 is a flowchart of the driving assistance processing program according to the present embodiment. Here, the driving assistance processing program is a program that is executed after an accessory (ACC) power supply of the vehicle 2 is turned on and supports the user by using a bird's-eye view image or an overhead image of the surroundings of the vehicle when the autonomous driving assistance of the vehicle is performed.

However, in the following embodiment, the bird's-eye view image or the overhead image of the surroundings of the vehicle is displayed while the autonomous driving assistance of the vehicle is performed, but it is not necessary to display the bird's-eye view image or the overhead image of the surroundings of the vehicle only when the autonomous driving assistance is performed, and the bird's-eye view image or the overhead image of the surroundings of the vehicle may be displayed even when the vehicle is traveling by manual driving. Alternatively, the bird's-eye view image or the overhead image of the surroundings of the vehicle may be displayed only when specific autonomous driving assistance such as parking assistance for long-range parking is performed. The program illustrated in the flowchart in Fig. 3 is stored in the RAM 32 or the ROM 33 included in the driving assistance device 1 and is executed by the CPU 31.

First, in step (hereinafter abbreviated as S) 1, the CPU 31 determines whether assisted traveling by the autonomous driving assistance is performed. As described above, a determination condition may be that specific autonomous driving assistance such as parking assistance is performed.

In the present embodiment, the assisted traveling by the autonomous driving assistance is performed in a situation in which the user operates the operation unit 3 to select to perform the autonomous driving assistance and it is determined that the vehicle can travel by the autonomous driving assistance. As contents of the autonomous driving assistance, for example, the current position of the vehicle, the lane in which the vehicle travels, and the positions of surrounding obstacles are detected at any time, and the vehicle control of a steering, a drive source, and a brake is automatically performed such that the vehicle travels along a generated travel trajectory at a speed according to a speed plan generated in the same manner. In particular, in the case of parking assistance, the vehicle control until parking in a parking space is automatically performed. However, only a steering operation may be automatically performed, and the drive source and the brake may be controlled based on a manual operation.

Then, if it is determined that the assisted traveling by the autonomous driving assistance is performed (YES in S1), the processing proceeds to S2. On the other hand, if it is determined that the assisted traveling by the autonomous driving assistance is not performed (NO in S1), the driving assistance processing program is ended.

The following processing is performed for each of the images captured by the front camera 6, the rear camera 7, and the side cameras 8A and 8B. For example, since the front camera 6, the rear camera 7, and the side cameras 8A and 8B according to the present embodiment have a frame rate of 30 fps (capturing 30 images per second), the most recently captured image is acquired every 33 ms, and the following processing is performed on the acquired image.

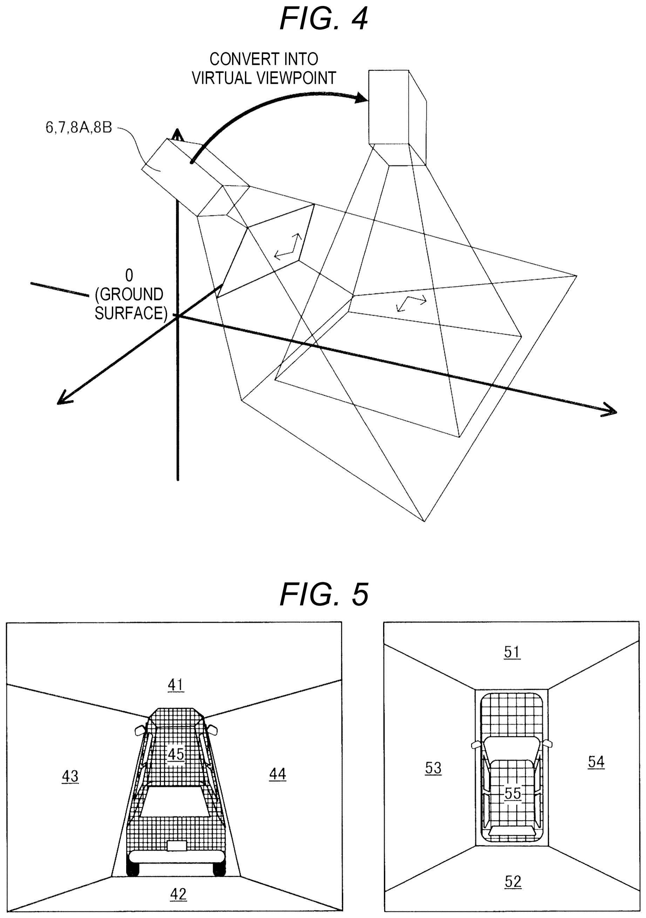

In S2, the CPU 31 generates a bird's-eye view image in which the surroundings of the vehicle is viewed obliquely downward from the sky and an overhead image in which the surroundings of the vehicle is viewed vertically downward from the sky based on real-time captured images captured by the front camera 6, the rear camera 7, and the side cameras 8A and 8B. For example, a method for generating a bird's-eye view image looking down the front of the vehicle will be described below. As illustrated in Fig. 4, the real-time captured image captured by each camera is projected onto a virtual projection surface that is a horizontal plane corresponding to a height from the ground surface, and the captured image projected onto the virtual projection surface is converted into an image viewed from a virtual viewpoint viewing the front side in the traveling direction obliquely downward from above the vehicle 2, thereby generating a bird's-eye view image of each camera. The conversion (viewpoint conversion) to the image viewed from the virtual viewpoint is performed by first converting each coordinate in a captured image coordinate system set along a surface perpendicular to the optical axis of the camera, into each coordinate in a ground surface coordinate system set along the ground surface, and then converting each coordinate into each coordinate in a bird's-eye view image coordinate system. Conversion formulas used for coordinate conversion are already known, and therefore, the description thereof will be omitted. Then, as illustrated in Fig. 5, a bird's-eye view image 41 obtained by converting the viewpoint of the captured image captured by the front camera 6, a bird's-eye view image 42 obtained by converting the viewpoint of the captured image captured by the rear camera 7, a bird's-eye view image 43 obtained by converting the viewpoint of the captured image captured by the side camera 8A, and a bird's-eye view image 44 obtained by converting the viewpoint of the captured image captured by the side camera 8B are synthesized (connected), and a host vehicle image 45 schematically indicating the host vehicle is inserted between the bird's-eye view images 41 to 44 to generate the bird's-eye view image. The virtual viewpoint of the bird's-eye view image may be in the vehicle (that is, a viewpoint of the occupant). Although the bird's-eye view image illustrated in Fig. 5 includes the bird's-eye view image 42 obtained by converting the viewpoint of the captured image captured by the rear camera 7, the bird's-eye view image 42 obtained by converting the viewpoint of the captured image captured by the rear camera 7 may be excluded from the synthesis targets when only the front of the vehicle is displayed. As the bird's-eye view image, a bird's-eye view image in which the rear of the vehicle is viewed obliquely downward is generated when the vehicle moves backward.

Since the overhead image is basically processed in the same manner as the generation of the bird's-eye view image except that the angle of the line-of-sight direction at the time of viewpoint conversion is different, the description thereof will be omitted. A host vehicle image 55 schematically indicating the host vehicle is inserted between overhead images 51 to 54 to generate an overhead image.

Next, in S3, the CPU 31 performs the image recognition processing on the bird's-eye view image and the overhead image generated in S2 to detect the object of attention included in each of the bird's-eye view image and the overhead image. Here, as described above, the object of attention can take at least one state of the moving state and the stopped state, requires attention for the host vehicle, and corresponds to, for example, a person or a bicycle. In the present embodiment, the image recognition processing is performed on the bird's-eye view image and the overhead image generated in S2, but the image recognition processing may be performed on a captured image of a camera which is a synthesis source of the bird's-eye view image and the overhead image.

As described above, in the detection of the object of attention in S3, the object of attention is detected using at least the captured image of the image-capturing device (one or more of the front camera 6, the rear camera 7, and the side cameras 8A and 8B). Then, when a category (type) of an object determined to be included in an image displayed on the liquid crystal display 4 using at least the captured image of the image-capturing device matches the category of the object of attention, the object is detected as an object of attention. In contrast, instead of using the category, a motion of the object may be confirmed for each object to individually determine whether the object corresponds to the object of attention. In this case, detection by the ultrasonic sensors 9A to 9L is also possible as to be described later.

As processing of detecting the object of attention from the bird's-eye view image and the overhead image in S3, for example, it is possible to perform luminance correction based on a luminance difference between the road surface and the object of attention, and then detect a boundary line between the road surface and the object of attention by performing binarization processing of separating the object of attention from the image, geometric processing of correcting a distortion, and smoothing processing of removing a noise in the image. Detection may be performed using known template matching processing or feature point detection processing. The image recognition processing on the captured image is not limited to the above example, and may be performed using, for example, machine learning.

In addition to the image recognition processing, the ultrasonic sensors 9A to 9L may also be used to detect the object of attention. In the detection by the ultrasonic sensors 9A to 9L, although the position of the object around the vehicle can be specified, the category (type) of the detected object, that is, whether the detected object corresponds to the object of attention cannot be basically identified, but for example, when the object moves, the object can be estimated as the object of attention. The type of the object detected by the ultrasonic sensors 9A to 9L may be identified by using cameras in combination.

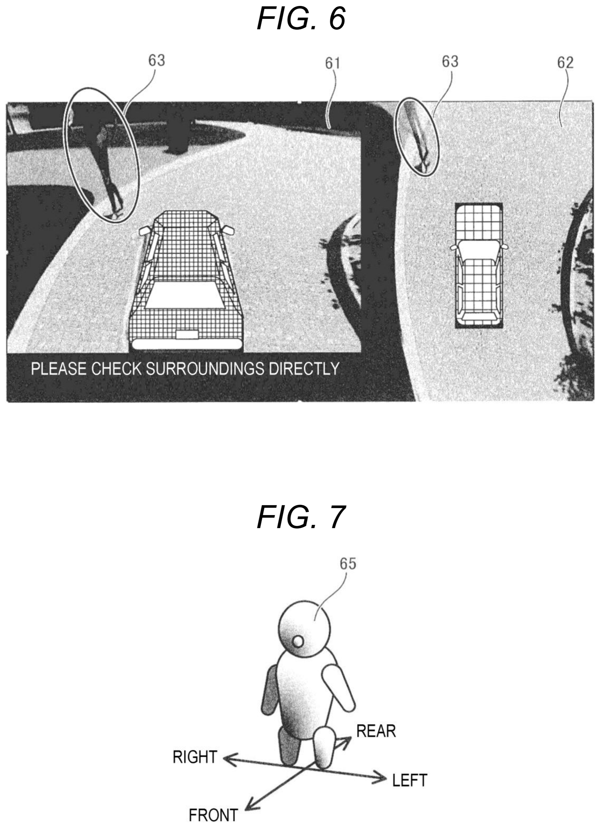

For example, Fig. 6 illustrates examples of a bird's-eye view image 61 and an overhead image 62 generated in S2, and in the example illustrated in Fig. 6, a person 63 located on the left front side of the host vehicle is detected as an object of attention. Here, as a problem of the related art, when a bird's-eye view image or an overhead image is generated by changing a viewpoint of a captured image captured by a camera, a three-dimensional object in the captured image may be displayed in a distorted or extended manner with respect to an original shape. For example, in the example illustrated in Fig. 6, in particular, the person 63 is displayed to extend greatly in an up-down direction, and it is difficult for the user to grasp whether this object is a person even when visually recognizing the bird's-eye view image 61 and the overhead image 62. In particular, when the person 63 is located near the synthesis boundary of the captured images, the person 63 who is actually present may disappear in the generated bird's-eye view image 61 or overhead image 62. In this case, although it is difficult to perform detection in the image recognition processing, the detection can be performed by using the ultrasonic sensors 9A to 9L.

Thereafter, in S4, the CPU 31 determines whether there is an object of attention in at least one of the bird's-eye view image 61 and the overhead image 62 generated in S2 as a result of the image recognition in S3. Since a range of a display target in the bird's-eye view image 61 and that in the overhead image 62 do not completely coincide with each other, the object of attention may be included in only one of the images depending on the position of the object of attention. As described above, when the object of attention is located near the synthesis boundary, the person 63 who is actually present may disappear in the bird's-eye view image 61 or the overhead image 62, but if it is possible to detect that the object of attention is located within the display ranges of the bird's-eye view image 61 and the overhead image 62, the object of attention is included in the bird's-eye view image 61 and the overhead image 62 even when the object of attention is not displayed.

Then, if it is determined that the object of attention is included in at least one of the bird's-eye view image 61 and the overhead image 62 generated in S2 (YES in S4), the processing proceeds to S6. On the other hand, if it is determined that the object of attention is not included in any of the bird's-eye view image 61 and the overhead image 62 generated in S2 (NO in S4), the processing proceeds to S5.

In S5, the CPU 31 displays, on the liquid crystal display 4, the real time bird's-eye view image 61 and the real time overhead image 62, which are generated in S2 and indicate the current environment around the vehicle, as assistance images for assisting the automatic driving of the vehicle. However, both the bird's-eye view image 61 and the overhead image 62 do not necessarily need to be displayed at the same time, and the bird's-eye view image 61 and the overhead image 62 may be switched and displayed by a user operation. Thereafter, the processing proceeds to S13.

In S6, the CPU 31 acquires a model image 65 indicating the appearance of the object of attention included in the bird's-eye view image 61 and the overhead image 62. Here, the model image 65 is a three-dimensional polygon image. For example, Fig. 7 illustrates the model image 65 of a person and a 3D image indicating the appearance of the person. The model image 65 may be, for example, a "wire frame model" that displays only sides or a "surface model" that displays surfaces.

As illustrated in Fig. 7, the model image 65 of a person has a shape that can be identified as a person and also allows identification of the orientation of the person (which side is the front and which side is the back). The orientation of the person corresponds to the movement direction of the person, and the front orientation is also the movement direction of the person. Similarly, the shape also allows identification of the right and left sides (which side is the right and which side is the left). With such a shape, when the model image 65 is synthesized with the bird's-eye view image 61 or the overhead image 62 as to be described later, the orientation of the person, who is the object of attention, can be specified by displaying the actual orientation of the person and the orientation of the model image 65 in association with each other. Meanwhile, it is also possible to intentionally create the model image 65 with an unclear orientation. In this case, even when the actual orientation of the person and the orientation of the model image 65 are different from each other, it is possible to prevent a sense of discomfort from being given.

Various materials may be set and mapping processing may be performed on the model image 65. Examples of the mapping processing include texture mapping in which an image of a texture is attached to a surface of an object, and bump mapping in which a reflection direction of light is changed to form fine irregularities. For example, the texture image is an image in which effects such as shading, transmission, and reflection are drawn, and each effect of the texture image is drawn not to be unnatural and such that the model image is easily visible in consideration of an arrangement orientation, surrounding brightness, a position of a light source (for example, sunlight or street light), and the like when the model image 65 is arranged in the bird's-eye view image 61 or the overhead image 62 in S7 to be described later. In contrast, it is not necessary to set the same light source as the actual light source, and a virtual light source may be set such that the model image is easily visually recognized by the user. It is desirable that a display color of the texture image is a color (for example, white, yellow, red, or the like) whose luminance difference or contrast ratio with the background color (the color of the road surface or the soil) is equal to or larger than a threshold.

In S6, the CPU 31 may create the model image 65 illustrated in Fig. 7 by executing processing such as modeling, scene layout setting, and rendering by using the information stored in the model image DB 36, or may acquire the model image 65 by storing the model image 65 completed in advance in the model image DB 36 and reading the model image 65 from the model image DB 36 in S6. When the model image 65 is created, it is desirable that the type of the object of attentions included in the bird's-eye view image 61 and the overhead image 62 is determined by the above-described image recognition processing, and the model image 65 of the corresponding type is created. In contrast, when the model image 65 is read, it is desirable that a plurality of model images 65 are stored in the model image DB 36 in advance for each type of the object of attention, the type of the object of attention included in the bird's-eye view image 61 and the overhead image 62 is similarly determined by the above-described image recognition processing, and the model image 65 of the corresponding type is read.

Thereafter, in S7, the CPU 31 acquires the state of the object of attention determined to be included in the bird's-eye view image 61 and the overhead image 62 in S4. Here, the state of the object of attention acquired in S7 includes a direction in which the object of attention moves (a direction in which the object of attention starts to move when the object of attention is stopped), whether the object of attention is moving, and a movement speed when the object of attention is moving. The direction in which the object of attention moves also corresponds to a front orientation of the object of attention.

For example, the CPU 31 can determine whether the object of attention is moving or stops and further determine the movement direction and the movement speed when the object of attention is moving by comparing positions of the object of attention detected between the previous and subsequent frames. Alternatively, the ultrasonic sensors 9A to 9L may be used to determine whether the object of attention is moving or stops.

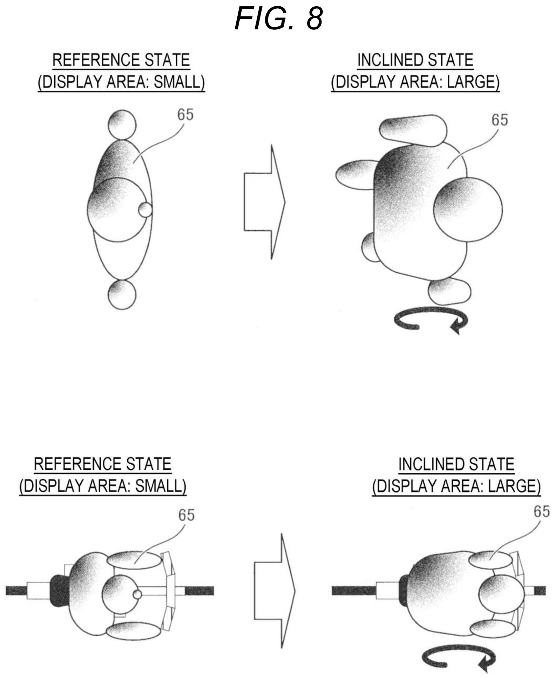

Subsequently, in S8, the CPU 31 inclines, based on the state of the object of attention acquired in S7, the model image 65 in a direction in which a display area of the model image 65 in the overhead image 62 increases, targeting the model image 65 to be synthesized with the overhead image 62 in S11 to be described later. The model image 65 is basically placed in a reference state of standing upright from the ground in a vertical direction (a state of standing on the road surface in the case of a human model image, and a state in which front and rear tires are in contact with the road surface in the case of a bicycle model image). As illustrated in Fig. 8, in the model image 65 placed in the reference state, the display area of the model image 65 is the smallest in the overhead image 62 viewed down from directly above. In the model image 65 displayed in such a small size, it is difficult to determine whether the object is a person, a bicycle, or another object when the user visually recognizes the object. Since the display area is small, the presence of the model image 65 may not be recognized. Therefore, in the present embodiment, the display area of the model image 65 in the overhead image 62 is increased by inclining the model image 65 from the reference state, and the above-described problem is solved. A direction of inclination is the direction in which the object of attention moves, that is, a front direction.

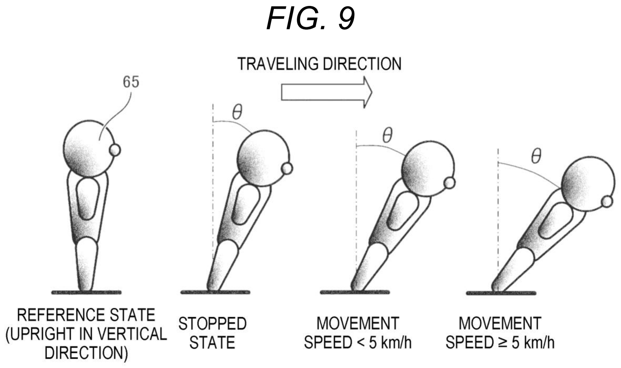

An inclination angle θ at the time of inclination is determined based on the state of the object of attention acquired in S7. Basically, the inclination angle θ is increased as the movement speed of the corresponding object of attention increases. For example, as illustrated in Fig. 9, the inclination angle θ is set to the smallest 20 degrees when the object of attention is in a stopped state (movement speed = 0), the inclination angle θ is set to 30 degrees when the movement speed is larger than 0 and less than 5 km/h, and the inclination angle θ is set to 40 degrees when the movement speed is larger than 5 km/h. How to set the inclination angle θ can be changed appropriately and may be changed depending on the type of the object of attention. For example, the inclination angle θ may be set based on different references for a pedestrian and a bicycle.

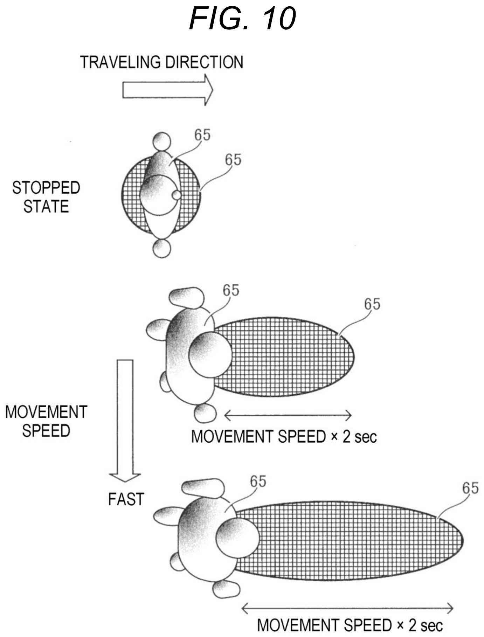

Subsequently, in S9, the CPU 31 sets a range in which the shadow of the model image 65 is displayed, targeting the model image 65 to be synthesized with the overhead image 62 in S11 to be described later. In the display of the shadow of the model image 65, when the corresponding object of attention is moving, the shadow is displayed in a range extended farther from the position of the model image 65 as the movement speed of the object of attention increases. More specifically, the shadow is displayed in a range extended to a position of the corresponding object of attention after two seconds. The extending direction is a direction in which the object of attention moves, that is, the front direction regardless of the light source. A width of the shadow is about the same as that of the model image 65. As a result, for example, as illustrated in Fig. 10, when the object of attention is in the stopped state (movement speed = 0), a range overlapping the model image 65 is a range in which the shadow is displayed. Since the shadow image is synthesized with the overhead image 62 earlier than the model image 65 in the shadow image and the model image 65, the model image 65 is preferentially displayed in the overlapping range.

As the movement speed increases, the position of the object of attention after two seconds becomes farther along the traveling direction. Therefore, the range in which the shadow is displayed extends in the traveling direction and is set wider. How to set the range in which the shadow is displayed can be changed appropriately and may be changed depending on the type of the object of attention. For example, the range in which the shadow is displayed may be set based on different references for a pedestrian and a bicycle.

Thereafter, in S10, the CPU 31 synthesizes a shadow image 66 with the overhead image 62 in the range previously set in S9 according to the position of the model image 65 to be synthesized with the overhead image 62 in S11 to be described later. A display color or a transmittance of the shadow image 66 may be changed according to a distance between the vehicle and the object of attention. Specifically, the color of the shadow image 66 is normally black or gray. The shadow of the object of attention at a position close to the vehicle (for example, within 3 m or when the routes overlap each other) may be displayed in red or yellow to be easily noticed by the user. Regarding the transmittance, the transmittance of the shadow of an object of attention which is closer to the vehicle may be lowered such that the shadow is more easily noticed by the user.

Subsequently, in S11, the CPU 31 synthesizes the model image 65 acquired in S6 according to the positions of the objects of attention included in the bird's-eye view image 61 and the overhead image 62. That is, the model image 65 is synthesized to be superimposed on the actual object of attention. In particular, for the model image 65 to be synthesized with the overhead image 62, the model image 65 after the inclination processing in S8 is synthesized. However, as described above, since the object of attention included in the bird's-eye view image 61 or the overhead image 62 is extended or distorted, it is desirable to perform the synthesis such that a ground contact point of the road surface and the model image 65 is aligned with a ground contact point of the road surface and the object of attention instead of aligning the entirety. Alternatively, it is also possible to measure position coordinates (a relative position with respect to the host vehicle) at which the object of attention is present and synthesize the model image 65 at the measured position coordinates. In particular, when the person 63 is located near the synthesis boundary of the captured image, the person 63 who is actually present may disappear in the generated bird's-eye view image 61 or overhead image 62, but by synthesizing the model image 65 according to the position coordinates, it is possible to superimpose the model image 65 according to the position of the object of attention which is not displayed but is actually present. The bird's-eye view image 61 and the overhead image 62 after the model image 65 is synthesized are hereinafter referred to as an assistance image 67.

In S11, the CPU 31 performs editing including at least one of enlargement, reduction, and rotation of the model image 65 when synthesizing the model image 65. Specifically, first, when the model image 65 is synthesized with the bird's-eye view image 61, the model image 65 is enlarged or reduced according to the position of the object of attention detected by the image recognition processing in S3. Specifically, the closer the object of attention is located from the virtual viewpoint of the bird's-eye view image 61, the larger the model image 65 becomes, and conversely, the farther the object of attention is located from the virtual viewpoint of the bird's-eye view image 61, the smaller the model image 65 becomes. For example, in the case of the model image 65 of a person, an average height of a person viewed from the virtual viewpoint is adjusted to an assumed size. Rotation processing is performed according to the position of the virtual viewpoint and the line-of-sight direction of the bird's-eye view image 61. That is, the angle is adjusted such that the model image 65 can be seen from the virtual viewpoint assuming that the model image 65 is located on the road surface at the same position as the object of attention. The orientation of the object of attention is detected, and the rotation processing is performed on the model image 65 such that the orientation of the object of attention matches the orientation of the model image 65. In contrast, when the model image 65 is synthesized with the overhead image 62, basically only the rotation processing is performed without performing the enlargement and reduction. Regardless of whether the model image 65 is the bird's-eye view image 61 or the overhead image 62, the model image 65 is basically placed in the reference state of standing upright from the ground in the vertical direction (a state of standing on the road surface in the case of a human model image, and a state in which front and rear tires are in contact with the road surface in the case of a bicycle model image). Since the overhead image 62 is an image viewed downward from vertically above, the model image 65 standing on the road surface is also an image viewed downward from vertically above. As a result, it may be difficult to grasp the overall shape of the model image 65 in the overhead image 62. Therefore, in the present embodiment, by synthesizing the model image 65 inclined by the inclination processing of S8, it is possible to display the model image 65 inclined according to the state of the object of attention in the overhead image 62.

When a plurality of objects of attention are included in the bird's-eye view image 61 or the overhead image 62, the processing of S6 to S11 is performed for each object of attention.

Then, in S12, the CPU 31 displays, on the liquid crystal display 4, an image which is obtained by synthesizing the model image 65 and the shadow image 66 with the real-time bird's-eye view image 61 and the real-time overhead image 62 that indicate the current environment around the vehicle and which is generated in S11 as the assistance image 67 for assisting the automatic driving of the vehicle. However, both the bird's-eye view image 61 and the overhead image 62 do not necessarily need to be displayed at the same time, and the bird's-eye view image 61 and the overhead image 62 may be switched and displayed by a user operation.

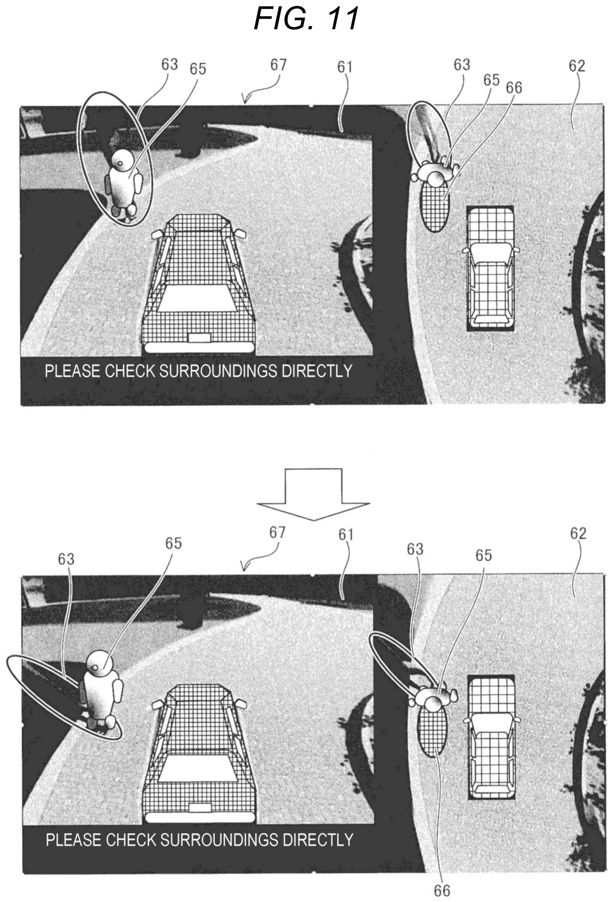

Here, Fig. 11 is a diagram illustrating an example of the assistance image 67 displayed on the liquid crystal display 4. In the example illustrated in Fig. 11, the model image 65 is superimposed and displayed on the person 63 located on the left front side of the host vehicle. The orientations of the displayed model images 65 are different between the bird's-eye view image 61 and the overhead image 62, the model image 65 is visually recognized when being viewed obliquely downward from the virtual viewpoint in the bird's-eye view image 61, and the model image 65 is visually recognized when being viewed vertically downward from the virtual viewpoint in the overhead image.

As described above, since the processing of S2 and subsequent steps is repeatedly executed for the most recently captured image and the assistance image 67 displayed on the liquid crystal display 4 is also updated in real time, when the object of attention moves, the position of the model image 65 included in the assistance image 67 also moves in the surrounding image (in the scenery) according to the movement as illustrated in Fig. 11. On the other hand, when the object of attention is in the stopped state, the position of the model image 65 included in the assistance image 67 is also fixed in the peripheral image (however, the position on the screen changes because the position of the virtual viewpoint changes when the host vehicle moves).

Here, in the bird's-eye view image 61 and the overhead image 62 illustrated in Fig. 11, in particular, the person 63 located on the left front side of the host vehicle is largely enlarged and displayed in a distorted manner, and it may be difficult to grasp the presence of the person 63 and the position of the person 63, but in the assistance image 67, by displaying the model image 65 imitating the person 63 in a superimposed manner at the position of the person 63, it is possible to allow the user to grasp the presence and the position of the person 63 clearly. In particular, when the person 63 is located near the synthesis boundary of the captured image, the person 63 who is actually present may disappear in the generated bird's-eye view image 61 or the generated overhead image 62, but even in this case, by displaying the model image 65, it is possible to allow the user to grasp the presence and the position of the person 63. The assistance image 67 displayed on the liquid crystal display 4 enables the user to clearly understand the relative relationship with the host vehicle position, including areas that are difficult to visually recognize directly, and to grasp the environment around the vehicle.

In particular, since the overhead image 62 is an image viewed downward from vertically above, the model image 65 standing on the road surface is also an image viewed downward from vertically above. As a result, it may be difficult to grasp the entire shape of the model image 65 in the overhead image 62. However, in the present embodiment, as described above, the corresponding model image 65 is inclined and displayed in a direction in which the display area increases according to the state of the object of attention. As a result, the visibility of the model image 65 can be improved. By inclining the model image 65 in the direction in which the object of attention moves, it is possible to grasp the direction in which the object of attention moves by the inclination direction. By displaying the shadow image 66 in the direction in which the object of attention moves, the direction in which the object of attention moves is clearer. Meanwhile, the higher the movement speed of the object of attention is, the larger the inclination angle is and the larger the display range of the shadow is, thereby prompting the user to be warned.

In the example illustrated in Fig. 11, the model image 65 to be synthesized with the bird's-eye view image 61 or the overhead image 62 is an opaque image having a transmittance of 0%, and a range of a real image to be superimposed cannot be visually recognized, but the model image 65 may be a semi-transparent image. In this case, it is possible to allow the user to visually recognize the object of attention in the actual image.

Even during the autonomous driving assistance, the occupant of the vehicle can cancel the autonomous driving assistance at any timing, and can stop the vehicle by executing the brake operation. The occupant of the vehicle can stop the autonomous driving assistance and stop the vehicle by performing the brake operation if necessary while visually recognizing the assistance image 67 displayed on the liquid crystal display 4.

Thereafter, in S13, the CPU 31 determines whether to end the assisted traveling by the autonomous driving assistance. Here, a condition for ending the assisted traveling by the autonomous driving assistance is, for example, in the case of parking assistance, completion of parking in a parking space. The condition may be that the user performs a predetermined end operation with the operation unit 3, or that a shift position is shifted to "P" or the engine is turned off. The end condition may be in a situation in which the autonomous driving assistance cannot be continued.

If it is determined that the assisted traveling by the autonomous driving assistance is ended (YES in S13), the driving assistance processing program is ended. On the other hand, if it is determined that the assisted traveling by the autonomous driving assistance is not ended (NO in S13), the processing returns to S2, and the assistance image is continuously displayed on the liquid crystal display 4.

As described in detail above, according to the driving assistance device 1 and the computer program executed by the driving assistance device 1 of the present embodiment, the overhead image 62 in which the surroundings of the vehicle is viewed vertically downward from the virtual viewpoint set above the vehicle is displayed on the liquid crystal display 4 (S12), and when there is an object of attention which is an object requiring attention for the vehicle around the vehicle, the model image 65 indicating an appearance of the object of attention is disposed and displayed at a position of the object of attention in the overhead image 62 (S6, S7). In displaying the model image 65, the model image 65 is inclined and displayed in the direction in which the display area of the model image 65 in the overhead image 62 increases according to the state of the object of attention (S8, S9). Therefore, the visibility of the model image is improved in the overhead image in which the surroundings of the vehicle is viewed vertically downward, and the user can easily grasp what kind of object of attention is present around the vehicle without missing the presence of the object of attention. It is also possible to prompt the user to be warned according to the state of the object of attention.

In displaying the model image 65, when the object of attention is moving, the model image 65 is inclined and displayed in a direction in which the object of attention moves from the reference state in which the model image 65 stands upright in the vertical direction from the ground (S9). Therefore, it is possible to easily grasp the direction in which the object of attention moves from the direction in which the model image 65 is inclined.

The model image 65 is the model image 65 capable of specifying the orientation of the object of attention, and in displaying the model image 65, the orientation of the object of attention and the orientation of the model image 65 are displayed to correspond to each other (S7). Therefore, when the display position of the model image is moved according to the movement of the object of attention, a sense of discomfort is not felt because the orientation of the model image and the movement direction coincide with each other. Even when the object of attention is stopped, the user can grasp a direction in which the object of attention is likely to move in the future by visually recognizing the displayed model image.

The shadow of the model image 65 disposed in the overhead image 62 is displayed in the overhead image 62, and in displaying the shadow of the model image 65, when the object of attention is moving, the shadow is displayed in the range extending from the position of the model image 65 in the direction in which the object of attention moves (S10, S11). Therefore, it is possible to more reliably prevent the user from overlooking the presence of the object of attention around the vehicle and to easily grasp the direction in which the object of attention moves from the direction in which the shadow extends.

### Appendix

The above embodiment also discloses the following techniques. In the following description, names or expressions of the corresponding configurations in the embodiment and reference numerals used in the drawings are parenthesized for reference. However, the constituent elements of each technique are not limited to Appendix.

### Technique A

A driving assistance device (1) according to claim 1, includes:
an object detection unit (10) configured to detect the object of attention, which is around the vehicle (2) and is an object requiring attention for the vehicle;
a model image acquisition unit (10) configured to acquire the model image (65) indicating the appearance of the object of attention;
and an image generation unit (10) configured to generate an image by synthesizing the model image according to a position of the object of attention in the overhead image (62), in which
the image synthesized by the image synthesis unit is displayed on the display device (4).

Accordingly, the visibility of the model image is improved in the overhead image in which the surroundings of the vehicle is viewed vertically downward, and the user can easily grasp what kind of object of attention is present around the vehicle without missing the presence of the object of attention. It is also possible to prompt the user to be warned according to the state of the object of attention.

### Technique B

The driving assistance device (1) according to claim 4, in which
in displaying the shadow of the model image (65), when the object of attention is moving, the shadow is displayed in a range extended farther from the position of the model image (65) as the movement speed of the object of attention increases.

Accordingly, the faster the movement speed of the object of attention is, that is, the more attention is required for the object of attention, the longer the shadow is displayed. Therefore, it is possible to prompt the user to be warned.

### Technique C

The driving assistance device (1) according to claim 4, in which
in displaying the shadow of the model image (65), a display color or a transmittance of the shadow is changed according to a distance between the vehicle (2) and the object of attention.

Accordingly, the display mode of the corresponding model image changes depending on the distance from the vehicle to the object of attention. Therefore, it is possible to prompt the user to be warned.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, the vehicle surrounding image displayed on the liquid crystal display 4 is the bird's-eye view image 61 and the overhead image 62 generated by processing the captured images captured by cameras including the front, rear, left, and right cameras, but only the overhead image 62 may be displayed.

The vehicle surrounding image displayed on the liquid crystal display 4 may be a virtual scenery image obtained by reproducing the surroundings of the vehicle by CG instead of the captured image captured by the camera. For example, a three-dimensional map image around the current position may be acquired or generated and displayed on the liquid crystal display 4, and the model image 65 may be synthesized at the position at which the object of attention is present in the displayed three-dimensional map image, thereby displaying the assistance image 67. Even in this case, the effect of allowing the user to more reliably recognize the object of attention is achieved.

In the present embodiment, the shadow image 66 of the model image 65 is also displayed together with the model image 65 in the overhead image 62, but the shadow image 66 may not be displayed. That is, the processing may proceed from S8 to S11 without performing the processing of S9 and S10 of the driving assistance processing program (Fig. 3).

In the present embodiment, it is assumed that the assistance image 67 illustrated in Fig. 11 is displayed while traveling by the autonomous driving assistance is performed, but the assistance image 67 illustrated in Fig. 11 may be displayed even while traveling by manual driving is performed. In this case, the determination condition of S1 is that the user instructs to display the assistance image or performs a vehicle operation such as switching the shift lever.

In Fig. 11, the display example of the model image 65 when the person 63 is present as the object of attention has been described, but when a bicycle or a motorcycle is present as the object of attention, it is desirable to display a model image indicating an appearance of the bicycle or the motorcycle. A stationary object, such as a wall or a curbstone, can be included as an object of attention, but it is necessary to distinguish the object of attention from the moving object, and it is desirable to display the stationary object without inclination. Since the presence of the vehicle can be easily grasped in the overhead image 62, it is desirable to display the vehicle without inclination even when the vehicle is included in the object of attention.

In the present embodiment, the processing of the driving assistance processing program (Fig. 3) is executed by the driving assistance ECU 10 of the driving assistance device 1, and an execution entity can be changed appropriately. For example, a control unit of the liquid crystal display 4, a vehicle control ECU, a control unit of a navigation device, and other in-vehicle devices may execute the processing. Alternatively, the processing can be executed by a communication terminal communicably connected to the vehicle 2. When the processing is executed by the communication terminal, a part of the processing can be executed by an external server.

## Claims

1. A driving assistance device (1), wherein
an overhead image (62) in which surroundings of a vehicle (2) is viewed vertically downward from a virtual viewpoint set above the vehicle is displayed on a display device (4),
when there is an object of attention (63), which is an object requiring attention for the vehicle, around the vehicle, a model image (65) indicating an appearance of the object of attention is disposed and displayed at a position of the object of attention in the overhead image, and
in displaying the model image, the model image is inclined and displayed in a direction in which a display area of the model image in the overhead image increases according to a state of the object of attention.

2. The driving assistance device according to claim 1, wherein
in displaying the model image, when the object of attention is moving, the model image is inclined and displayed in a direction in which the object of attention moves from a reference state in which the model image stands upright in a vertical direction from a ground surface.

3. The driving assistance device according to claim 1 or 2, wherein
the model image is a model image for specifying an orientation of the object of attention, and
in displaying the model image, the model image is displayed with the orientation of the object of attention and an orientation of the model image in association with each other.

4. The driving assistance device according to claim 1, wherein
a shadow of the model image disposed in the overhead image is displayed in the overhead image, and
in displaying the shadow of the model image, when the object of attention is moving, the shadow is displayed in a range extending from a position of the model image in a direction in which the object of attention moves.
